# EUROPÄISCHE PATENTSCHRIFT

(11) **EP 1 754 643 B1**
(45) Veröffentlichungstag und Bekanntmachung des Hinweises auf die Patenterteilung: **14.10.2009**
(21) Anmeldenummer: 06017191.5
(22) Anmeldetag: 17.08.2006
(51) Int. Cl.: B60W 30/18, B60W 10/06, B60W 10/10, F16H 61/46

(54) **Verfahren zum Regeln eines Antriebssystems und elektronische Steuereinheit**
Method for regulating a drivetrain and electronic control unit
Procédé de commande d'une chaîne cinématique d'entrainement et unité de commande électronique

(30) Priorität: 17.08.2005 DE 102005038905
(43) Veröffentlichungstag der Anmeldung: 21.02.2007
(73) Patentinhaber: Brueninghaus Hydromatik GmbH, 89275 Elchingen (DE)
(72) Erfinder: Nagel, Frank, 89073 Ulm (DE); Brand, Michael, 89075 Ulm (DE)
(74) Vertreter: Körfer, Thomas

(56) Entgegenhaltungen:
- EP-A- 1 439 337
- DE-A1- 2 848 595
- DE-A1- 3 634 549
- DE-A1- 10 350 308
- DE-A1- 19 757 328
- DE-C1- 10 037 676
- US-A- 4 679 396

## Beschreibung

Die Erfindung betrifft ein Verfahren zum Regeln eines Antriebssystems mit einer Antriebsmaschine und zumindest einer damit verbundenen hydrostatischen Antriebseinheit sowie eine elektronische Steuereinheit.

Zum Antreiben von hydrostatischen Antrieben werden meist Dieselmotoren als Antriebsmaschinen eingesetzt, die mit einer hydrostatischen Antriebseinheit verbunden sind. Die hydrostatische Antriebseinheit besteht in der Regel aus einer verstellbar ausgeführten Hydropumpe und einem damit im offenen oder geschlossenen Kreislauf verbundenen Hydromotor. Die letztlich durch die hydrostatische Antriebseinheit abzugebende Leistung wird durch die durchzuführende Aktion bestimmt und kann daher in weiten Bereichen variieren. So sind beispielsweise die erforderlichen Leistungen während des Arbeitsbetriebs eines Baggers in der Regel höher als während des Fahrbetriebs. Um die von der als primärer Kraftquelle wirkenden Antriebsmaschine abgegebenen Leistung beeinflussen zu können, wird die normalerweise als Dieselmaschine ausgeführte Antriebsmaschine drehzahlgesteuert.

Es ist üblich, durch die Steuereinheit der hydrostatischen Antriebseinheit einen Drehzahlwert vorzugeben, der dann durch die Motorsteuerung der Antriebsmaschine umgesetzt wird. Um das Einhalten der entsprechenden Drehzahl bzw. die Betätigung des Stellglieds zur Einstellung der Dieseldrehzahl zu verbessern, ist es aus der DE 196 43 924 A1 bekannt, den von der Motorsteuerung ausgegebenen Referenzwert mit einem gemessenen Ist-Wert zu vergleichen und hieraus einen Korrekturwert zu berechnen. Der Korrekturwert wird an einen Schrittmotor ausgegeben, der das Stellglied nachsteuert und so die tatsächliche Drehzahl der Dieselmaschine korrigiert. Mit der vorgeschlagenen Verbesserung werden die durch das Spiel der mechanischen Komponenten unvermeidbaren Schwankungen eliminiert.

Die bekannte Steuerung hat den Nachteil, dass das spezifische Verhalten sowohl des hydrostatischen Antriebs als auch der Dieselmaschine nicht berücksichtigt wird. Insbesondere wird bei der Vorgabe eines Drehzahl-Sollwerts weder der Wirkungsgrad des hydrostatischen Antriebs noch der Wirkungsgrad der Dieselmaschine berücksichtigt. Die Antriebsmaschine wird daher in einem Teillastbereich oft bei einer Drehzahl betrieben, bei der wegen eines schlechten Wirkungsgrads der hydrostatischen Antriebseinheit oder auch der Antriebsmaschine unnötige Brennstoffmengen verbraucht werden.

Das Dokument DE 100 37 676 C1 offenbart ein Verfahren zum Regeln eines Antriebssystems mit einer Antriebsmaschine und zumindest einer damit verbundenen hydrostatischen Antriebseinheit. Das Verfahren umfasst ein Ermitteln einer Abgabeleistung der hydrostatischen Antriebseinheit und ein Ermitteln eines Betriebspunkts für das Antriebssystem unter Berücksichtigung eines ersten Kennfelds der hydrostatischen Antriebseinheit und der Abgabeleistung.

Das gattungsbildende Dokument US Patent 4,679,396 zeigt ferner dass die hydrostatische Antriebseinheit zwei jeweils separat verstellbare Kolbenmaschinen aufweist und ein Sollwert für deren Schluck- und/oder Fördervolumen unter Berücksichtigung eines zweiten Kennfelds der Antriebsmaschine ermittelt wird.

Die Erfindung hat daher die Aufgabe, ein Verfahren und eine elektronische Steuereinheit zum Regeln eines Antriebssystems zu schaffen, welches hinsichtlich des primären Energieeinsatzes verbessert ist.

Die Aufgabe wird durch das erfindungsgemäße Verfahren mit den Merkmalen nach Anspruch 1 und die elektronische Steuereinheit nach Anspruch 11 gelöst.

Durch das erfindungsgemäße Verfahren und die elektronische Steuereinheit wird ein Antriebssystem geregelt, welches eine Antriebsmaschine und zumindest eine damit verbundene hydrostatische Antriebseinheit umfasst. Zunächst wird die Abgabeleistung der hydrostatischen Antriebseinheit ermittelt. Für diese Abgabeleistung der hydrostatischen Antriebseinheit wird unter Berücksichtigung eines ersten Kennfelds der hydrostatischen Antriebseinheit ein Betriebspunkt für die Antriebsmaschine ermittelt. Durch die Berücksichtigung des ersten Kennfelds der hydrostatischen Antriebseinheit kann somit ein Betriebspunkt gewählt werden, bei dem die eingangsseitig verfügbare Leistung möglichst verlustarm durch die hydrostatische Antriebseinheit umgesetzt wird. Damit lässt sich das Verhältnis von zugeführter Leistung zur Abgabeleistung günstig beeinflussen, wodurch insgesamt weniger primäre Energie eingesetzt werden muss. Die primäre Energie kann dabei entweder eine Stromzuführung bei einer elektromotorisch angetriebenen Antriebseinheit oder aber der Kraftstoff bei einer verbrennungsmotorisch angetriebenen hydrostatischen Antriebseinheit sein. Zur Realisierung des Verfahrens ist eine elektronische Steuereinheit vorgesehen, in der ein erstes Kennfeld der hydrostatischen Antriebseinheit gespeichert ist. Durch die elektronische Steuereinheit ist ein Betriebspunkt unter Berücksichtigung einer Abgabeleistung der hydrostatischen Antriebseinheit ermittelbar.

Ferner ist es vorgesehen bei einer hydrostatischen Antriebseinheit, welche zumindest eine verstellbare Kolbenmaschine aufweist, einen Sollwert für deren Schluck- und/oder Fördervolumen zu bestimmen, wobei bei der Festlegung des Schluck- bzw. Fördervolumens ein zweites Kennfeld der Antriebsmaschine berücksichtigt wird. Damit kann zusätzlich zu der Berücksichtigung des ersten Kennfelds der hydrostatischen Antriebseinheit bei der Festlegung eines Betriebspunkts für das Antriebssystem umgekehrt auch bei der Festlegung des Schluck- bzw.

Fördervolumens der hydrostatischen Kolbenmaschine das zweite Kennfeld der Antriebsmaschine berücksichtigt werden.

Hierzu ist es insbesondere vorteilhaft, das erste Kennfeld der hydrostatischen Antriebseinheit und das zweite Kennfeld der Antriebsmaschine erfindungsgemäß zu verwenden, um hieraus ein kombiniertes Kennfeld zu ermitteln. Dieses kombinierte Kennfeld dient dann als Grundlage für die Entscheidung, mit welchen Einstellungen die hydrostatische Antriebseinheit und der Antriebsmotor betrieben werden. Dabei wird berücksichtigt, dass zur Erreichung einer bestimmten Abgabeleistung einer hydrostatischen Antriebseinheit zwei Parameter einstellbar sind. So wird eine konstante hydraulische Leistung erreicht, wenn entweder bei einer niedrigen Drehzahl ein hohes Schluck- bzw. Fördervolumen eingestellt wird oder aber umgekehrt bei einer hohen Drehzahl ein niedriges Förder- bzw. Schluckvolumen eingestellt wird. Danach lässt sich die jeweils zugeordnete Drehzahl der Antriebsmaschine bestimmen, so dass unter Berücksichtigung beider Kennfelder sowohl der hydrostatischen Antriebsmaschine als auch der hydrostatischen Antriebseinheit für das Antriebssystem der ideale Betriebspunkt zum Erreichen eines niedrigen Verbrauchs bestimmen lässt.

Die Unteransprüche betreffen vorteilhafte Weiterbildungen des erfindungsgemäßen Gegenstands.

Es ist weiterhin vorteilhaft, das kombinierte Kennfeld aus dem ersten Kennfeld der hydrostatischen Antriebseinheit und dem zweiten Kennfeld der Antriebsmaschine nur für einen aus der erforderlichen Abgabeleistung ermittelten möglichen Drehzahlbereich zu bestimmen. Durch die Beschränkung auf einen überhaupt in Betracht zu ziehenden Drehzahlbereich wird die Rechenarbeit, die erforderlich ist, um unmittelbar während des Betriebs in Echtzeit den optimalen Betriebspunkt zu ermitteln, reduziert. Gemäß einem weiteren Unteranspruch ist der ermittelte Betriebspunkt derjenige Betriebspunkt des Antriebssystems, bei dem der Wirkungsgrad optimiert ist. Ein optimierter Wirkungsgrad kann dabei im einfachsten Fall das Maximum des Wirkungsgradsverlaufs des kombinierten Kennfelds sein. Unter optimiertem Wirkungsgrad muss jedoch nicht zwangsläufig das Maximum verstanden werden. Vielmehr ist es beispielsweise möglich, bestimmte Betriebspunkte, beispielsweise wegen thermischer Belastung der Verbrennungsmaschine oder kritischem Öldruck, nicht anzufahren, obwohl dort der höchste Wirkungsgrad zu erreichen wäre.

Gemäß einer bevorzugten Ausführungsform wird die erforderliche Abgabeleistung der hydrostatischen Antriebseinheit aus gemessenen Betriebsparametern der hydrostatischen Antriebseinheit durch die elektronische Steuereinheit ermittelt. Dies kann in vorteilhafter Weise durch die Verwendung einer sogenannten OBD (On Board Diagnosis)-Steuereinheit ermittelt werden, die beispielsweise verschiedene Parameter der hydraulischen Antriebseinheit misst. Insbesondere sind hier die Messungen des Förderdrucks sowie des geförderten Volumens bzw. des eingestellten Schwenkwinkels zu nennen. Da diese Parameter vorzugsweise durch eine an der hydrostatischen Antriebseinheit vorgesehene Steuerelektronik bestimmt werden, ist es weiterhin vorteilhaft, innerhalb dieser Steuereinheit den idealen Betriebspunkt zu ermitteln. Hierzu ist in der Steuereinheit ein Speicher vorgesehen, in dem sowohl das erste Kennfeld der hydrostatischen Antriebseinheit als auch das zweite Kennfeld der Antriebsmaschine abgelegt sind.

In der elektronischen Steuereinheit des hydrostatischen Antriebs wird der ideale Betriebspunkt und somit diejenige Antriebsdrehzahl der Antriebsmaschine ermittelt, in der der maximale Wirkungsgrad des Antriebssystems erreicht ist. Durch die elektronische Steuereinheit der hydrostatischen Antriebseinheit wird für diesen optimalen Betriebspunkt eine zugeordnete Solldrehzahl ermittelt und vorzugsweise über einen CAN-Bus an das Motorsteuergerät der Antriebsmaschine übermittelt. Die erforderlichen Parameter zur Verstellung der Dieselmaschine auf diese vorgegebene Solldrehzahl werden dann durch das Motorsteuergerät der Antriebsmaschine selbst ermittelt. Seitens des Motorsteuergeräts sind daher keinerlei Veränderungen erforderlich, so dass auch bereits bestehende Regelsysteme nachgerüstet werden können. Zu einem Nachrüsten bestehender Regelsysteme kann z.B. eine neue Firmware auf die Steuereinheit der hydrostatischen Antriebseinheit im Zuge einer Wartungsmaßnahme aufgespielt werden.

Die Verstellung des gesamten Antriebssystems erfolgt vorzugsweise, indem zunächst der Antriebsmotor auf die ermittelte Solldrehzahl entsprechend dem ermittelten optimierten Betriebspunkt verstellt wird. Im Anschluss an die Verstellung der Antriebsmaschine auf die Solldrehzahl wird dann die hydrostatische Antriebseinheit auf ihren zugeordneten Betriebspunkt verstellt, wozu das Schluck- und/oder Fördervolumen der Kolbenmaschine(n) eingestellt wird. Im Falle einer aus einem Hydromotor und einer Hydropumpe bestehenden Fahrantriebs betrifft das Verstellen des Schluck- bzw. Fördervolumens sowohl die Einstellung des Schwenkwinkels der Hydropumpe als auch des über zwei Arbeitsleitungen in einem geschlossenen Kreislauf damit verbundenen Hydromotors.

Das erfindungsgemäße Verfahren sowie die elektronische Steuereinheit sind in der Zeichnung dargestellt und werden in der nachfolgenden Beschreibung näher erläutert. Es zeigen:
- Fig. 1: eine schematische Darstellung eines Antriebssystems zur Durchführung des erfindungsgemäßen Verfahrens;
- Fig. 2: eine vereinfachte Darstellung der Ermittlung eines kombinierten Kennfelds;
- Fig. 3: eine vereinfachte Darstellung des Ablaufs des Verfahrens zur Ermittlung eines optimierten Betriebspunkts;
- Fig. 4: ein Beispiel für ein zweidimensionales Kennfeld einer als Verbrennungsmotor ausgeführten Antriebsmaschine und
- Fig. 5: ein Blockschaltbild einer erfindungsgemäßen Steuereinheit.

Bevor die einzelnen Verfahrensschritte des erfindungsgemäßen Verfahrens zum Regeln eines Antriebssystems im Detail dargestellt werden, soll zunächst der grundsätzliche Aufbau eines zur Anwendung des erfindungsgemäßen Verfahrens zugrundeliegenden Antriebssystems erläutert werden.

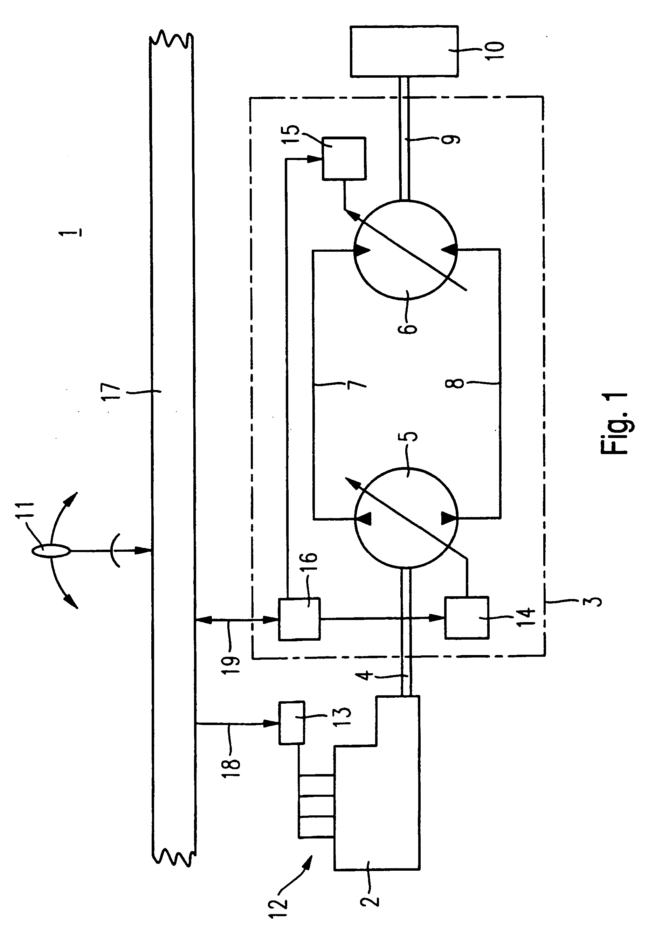

In Fig. 1 ist hierzu ein Antriebssystem 1 dargestellt, welches als Antriebsmaschine einen Verbrennungsmotor 2 aufweist. Der Verbrennungsmotor 2 ist im Regelfall als Dieselmaschine ausgeführt und treibt eine hydrostatische Antriebseinheit 3 an. Der Verbrennungsmotor 2 ist hierzu über eine Triebwelle 4 mit einer verstellbar ausgeführten Hydropumpe 5 verbunden. Die verstellbare Hydropumpe 5 ist mit einem in dem dargestellten Ausführungsbeispiel ebenfalls verstellbaren Hydromotor 6 über eine erste Arbeitsleitung 7 und eine zweite Arbeitsleitung 8 in einem geschlossenen hydraulischen Kreislauf verbunden.

Als hydrostatische Antriebseinheit 3 ist jedoch nicht ausschließlich der in Fig. 1 dargestellte Fahrantrieb denkbar. Vielmehr kann auch eine Hydropumpe 5 verwendet werden, um anstelle des Hydromotors 6 einen einfach oder doppelt wirkenden Hydraulikzylinder zu versorgen. Ebenso ist die dargestellte Anordnung in einem geschlossenen Kreislauf keine notwendige Voraussetzung zur Durchführung des erfindungsgemäßen Verfahrens. Als Hydropumpe 5 bzw. Hydromotor 6 werden vorzugsweise hydrostatische Kolbenmaschinen eingesetzt.

Der Einfachheit halber wird nachfolgend die Funktionsweise des erfindungsgemäßen Verfahrens ausschließlich anhand des in Fig. 1 dargestellten Fahrantriebs als hydrostatische Antriebseinheit 3 erläutert. Der verstellbare Hydromotor 6 der hydrostatischen Antriebseinheit 3 ist über eine zweite Triebwelle 9 mit einem angetriebenen Rad 10 beispielsweise eines Baggers verbunden.

Zur Vorgabe der Fahrtrichtung sowie der Fahrgeschwindigkeit dient ein Fahrhebel 11, über den ein Steuersignal von einem Bediener des Baggers erzeugt wird. Entsprechend der Vorgabe des Fahrhebels 11 wird die benötigte Kraftstoffmenge ermittelt, die der Verbrennungskraftmaschine 2 über das Einspritzsystem 12 zugeführt wird. Zum Ermitteln der benötigten Kraftstoffmenge für das Einspritzsystem 12 ist ein Motorsteuergerät 13 vorgesehen, welches eine Einspritzmenge sowie -zeit vorgibt. Zur Umsetzung des Fahrwunsches wird zudem in der hydrostatischen Antriebseinheit 3 sowohl das Fördervolumen der verstellbaren Hydropumpe 5 als auch das Schluckvolumen des verstellbaren Hydromotors 6 so eingestellt, dass die Drehzahl der Triebwelle 4 in eine dem Fahrwunsch entsprechende Drehzahl der zweiten Triebwelle 9 umgesetzt wird. Hierzu ist mit der Hydropumpe 5 eine erste Verstellvorrichtung 14 gekoppelt, die in Abhängigkeit von einem Stellsignal auf einen Verstellmechanismus der Hydropumpe 5 wirkt.

Über den Verstellmechanismus der Hydropumpe 5 wird ein bestimmter Schwenkwinkel im Falle einer als Schrägscheibenmaschine ausgeführten hydrostatischen Kolbenmaschine eingestellt. In vergleichbarer Weise ist eine zweite Verstellvorrichtung 15 an dem verstellbaren Hydromotor 6 vorgesehen, die mit dem Verstellmechanismus des Hydromotors 6 zusammenwirkt. In dem dargestellten Ausführungsbeispiel werden die erste Verstellvorrichtung 14 und die zweite Verstellvorrichtung 15 mit einem elektrischen Stellsignal beaufschlagt, welches für beide Verstellvorrichtung 14, 15 durch eine gemeinsame elektronische Steuereinheit der hydrostatischen Antriebseinheit 3 ermittelt wird.

Anstelle der zentralen elektronischen Steuereinheit 16 der hydrostatischen Antriebseinheit 3 ist es auch möglich, jeder Kolbenmaschine, also der Hydropumpe 5 und dem Hydromotor 6 jeweils ein elektronisches Steuergerät zuzuordnen, die sich zu einer elektronischen Steuereinheit der hydrostatischen Antriebseinheit ergänzen. Im Falle der Verwendung zweier getrennter Steuergeräte für die Hydropumpe 5 und den Hydromotor 6 können z.B. beide Steuergeräte direkt miteinander verkabelt werden, so dass nur eine gemeinsame Schnittstelle zu den weiteren damit zu koppelnden Steuereinrichtungen erforderlich ist.

In dem in Fig. 1 dargestellten bevorzugten Ausführungsbeispiel wird dagegen eine einzelne elektronische Steuereinheit in Form einer sogenannten OBD-Steuereinheit an der Hydropumpe 5 verwendet, welche mit dem Motorsteuergerät 13 über einen CAN-Bus 17 kommuniziert. Zur Anbindung des Motorsteuergeräts 13 an den CAN-Bus 17 ist eine erste Signalleitung 18 vorgesehen. Ebenso ist die elektronische Steuereinheit 16 der hydrostatischen Antriebseinheit 3 über eine zweite Signalleitung 19 mit dem CAN-Bus 17 verbunden.

Bei der Umsetzung eines Signals des Fahrhebels 11 wird erfindungsgemäß der Betriebspunkt der Antriebsmaschine 2 unter Berücksichtigung eines ersten Kennfelds der hydrostatischen Antriebseinheit 3 ermittelt. Zunächst wird hierzu die Abgabeleistung der hydrostatischen Antriebseinheit 3 festgestellt. Zur Bestimmung der Abgabeleistung der hydrostatischen Antriebseinheit 3 werden beispielsweise das eingestellte Fördervolumen der Hydropumpe 5 sowie die Druckdifferenz zwischen Vor- und Rücklaufleitung bestimmt. Aus diesen Ist-Werten wird die jeweils zu einem Zeitpunkt abgegebene hydrostatische Leistung ermittelt. Um die Leistungsanforderung noch besser bestimmen zu können, kann zusätzlich eine Änderung der Position des Fahrhebels 11 bei der Ermittlung der Abgabeleistung berücksichtigt werden und so z.B. einem Beschleunigungswunsch mit erhöhter Leistungsanforderung Rechnung tragen.

Aufgrund der ermittelten Abgabeleistung wird zunächst ein Drehzahlfenster ermittelt, innerhalb dessen die Antriebsmaschine 2 in der Lage ist, die geforderte Leistung aufzubringen. Dies wird vorzugsweise unter Verwendung eines zweiten Kennfelds der Antriebsmaschine 2 durchgeführt. Für dieses Drehzahlfenster wird in der elektronischen Steuereinheit 16 der hydrostatischen Antriebseinheit 3 unter Berücksichtigung des ersten Kennfelds der hydrostatischen Antriebseinheit 3 ein Betriebspunkt für das Antriebssystem 1 ermittelt.

Von der elektronischen Steuereinheit 16 der hydrostatischen Antriebseinheit 3 wird anschließend eine Drehzahl für die Antriebsmaschine 2, die dem ermittelten Betriebspunkt entspricht, über die zweite Signalleitung 19, den CAN-Bus 17 und die erste Signalleitung 18 an das Motorsteuergerät 13 übermittelt. Das Motorsteuergerät 13 steuert daraufhin ein Einspritzsystem 12 so an, dass die Antriebsmaschine 2 auf die dem ermittelten Betriebspunkt entsprechende Solldrehzahl eingestellt wird. Die weitere Regelung der Drehzahl der Antriebsmaschine 2 wird daraufhin durch das Motorsteuergerät 13 übernommen. Durch das Motorsteuergerät 13 werden Einspritzmenge und - zeitpunkt im Falle eines Dieselmotors so geregelt, dass die vorgegebene Drehzahl des Betriebspunkts konstant gehalten wird, solange durch die elektronische Steuereinheit 16 keine geänderte Solldrehzahl übermittelt wird.

Nachdem die Drehzahl für die Antriebsmaschine 2 eingestellt ist, wird die hydrostatische Antriebseinheit 3 entsprechend zum Erreichen des Betriebspunkts des Antriebssystems 1 geregelt. Hierzu werden die Schwenkwinkel der Hydropumpe 5 und des Hydromotors 6 so eingestellt, dass das erforderliche Übersetzungsverhältnis erreicht wird, bei dem die Eingangsdrehzahl der Triebwelle 4 dem Fahrwunsch entsprechend auf eine Ausgangsdrehzahl der Abtriebswelle 9 übersetzt wird.

Neben dem ersten Kennfeld der hydrostatischen Antriebseinheit 3 wird auch das zweite Kennfeld der Antriebsmaschine 2 bei der Ermittlung des Betriebspunkts des Antriebssystems 1 berücksichtigt. Hierzu ist in einem Speicher der elektronischen Steuereinheit 16 auch das zweite Kennfeld der Antriebsmaschine 2 abgelegt. Für den zunächst ermittelten Drehzahlbereich der Antriebsmaschine 2, in dem das erforderliche Drehmoment durch die Antriebsmaschine 2 aufgebracht werden kann, wird aus dem zweiten Kennfeld der Antriebsmaschine 2 und dem Kennfeld der hydrostatischen Antriebseinheit 3 ein kombiniertes Kennfeld ermittelt. Das kombinierte Kennfeld wird vorzugsweise nur in dem in Betracht zu ziehenden Drehzahlbereich bestimmt, um den Rechenaufwand in dem elektronischen Steuergerät 16 gering zu halten. Dieser reduzierte Rechenaufwand kann auch bei geringer Rechenleistung der elektronischen Steuereinheit 16 in Echtzeit durchgeführt werden. Das kombinierte Kennfeld kann auch vorab ermittelt und in dem Speicher abgelegt sein. Die Bestimmung des Betriebspunkts ist dann auf den ermittelten Drehzahlbereich innerhalb des vollständigen kombinierten Kennfelds beschränkt.

In dem kombinierten Kennfeld wird dann ein optimaler Betriebspunkt für das Antriebssystem 1 bestimmt. Im einfachsten Fall ist dieser optimale Betriebspunkt derjenige Punkt mit dem höchsten Gesamtwirkungsgrad. Es ist jedoch auch möglich, dass bestimmte Randbedingungen das Einstellen eines Betriebspunkts erfordern, der von dem maximalen Gesamtwirkungsgrad des Antriebssystems 1 abweicht. Eine solche Situation kann beispielsweise auftreten, wenn für eine dauernde Belastung der Antriebsmaschine 2 bei einer bestimmten Drehzahl eine kritisch hohe Betriebstemperatur der Antriebsmaschine 2 oder hohe Systemdrücke zu erwarten sind. In diesem Fall wird zugunsten der Betriebssicherheit ein Betriebspunkt mit einem reduzierten Gesamtwirkungsgrad angesteuert, bei dem jedoch beispielsweise eine verbesserte Kühlung oder niedrigere Drücke möglich sind.

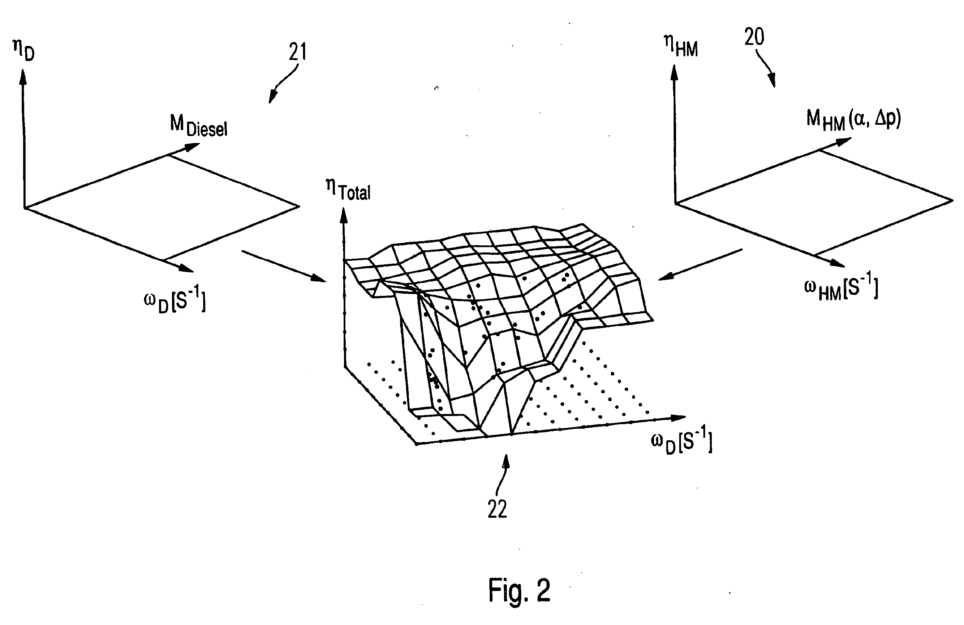

Fig. 2 zeigt noch einmal in einer Übersicht die Vorgehensweise. Zunächst werden in der elektronischen Steuereinheit 16 ein erstes Kennfeld 20 der hydrostatischen Antriebseinheit 3 sowie ein zweites Kennfeld 21 des Dieselmotors abgespeichert. Die Informationen der beiden Kennfelder sind in Fig. 2 als dreidimensionale Graphiken dargestellt, wobei für jede Drehzahl und das entsprechende Moment jeweils ein Wirkungsgrad η_{D} bzw. η_{HM} zugeordnet ist. In der Darstellung der Fig. 2 ist für die hydrostatische Antriebseinheit 3 eine vereinfachte Darstellung für ein Kennfeld gewählt, bei der beispielsweise lediglich eine einzelne Hydropumpe zum Einsatz kommt. Eine solche Anordnung ergibt sich im Unterschied zu dem in Fig. 1 dargestellten Fahrantrieb, wenn durch die einzelne Hydropumpe ein Arm eines Baggers bewegt wird. In diesem Fall bestimmt sich der Wirkungsgrad η der hydrostatischen Antriebseinheit nahezu allein durch das Kennfeld der Hydropumpe. Bei dem in Fig. 1 dargestellten Fahrantrieb wird das erste Kennfeld der hydrostatischen Antriebseinheit 3 dagegen zunächst aus den einzelnen Kennfeldern der Hydropumpe 5 sowie der Hydropumpe 6 bestimmt, so dass anstelle des Schwenkwinkels als Parameter das Übersetzungsverhältnis der entsprechenden hydrostatischen Antriebseinheit 3 tritt.

Wie es bereits erläutert wurde, wird der optimierte Betriebspunkt in dem kombinierten Kennfeld 22 ermittelt. Das kombinierte Kennfeld 22 ordnet in dem ermittelten zur Verfügung stehenden Drehzahlfenster für die Antriebsdrehzahl jeder möglichen Einstellung der hydrostatischen Antriebseinheit 3 einen Wert für den Gesamtwirkungsgrad η_{Total} zu. In diesem dreidimensionalen, kombinierten Kennfeld 22 wird ein Betriebspunkt mit beispielsweise maximalem Wirkungsgrad des Antriebssystems 1 ermittelt und anschließend die diesem Betriebspunkt zugeordnete Antriebsdrehzahl ω_{D} der Antriebsmaschine 2 als Solldrehzahl abgelesen.

Das Kombinieren des ersten Kennfeldes 20 mit dem zweiten Kennfeld 21, um das kombinierte Kennfeld 22 zu erhalten, erfolgt vorzugsweise in der elektronischen Steuereinheit 16 der hydrostatischen Antriebseinheit 3. Durch das Berechnen des kombinierten Kennfelds 22 in der elektronischen Steuereinheit 16 ist es auch möglich, vorhandene Antriebssysteme durch ein Aufspielen einer neuen Firmware auf das elektronische Steuergerät 16 der hydrostatischen Antriebseinheit 3 einfach zu aktualisieren. Das Motorsteuergerät 13 erhält dagegen wie bisher eine Solldrehzahl als Eingangsgröße, aus der in dem Motorsteuergerät 13 Einspritzmenge und -zeitpunkt ermittelt werden. Vorhandene Motorsteuergeräte 13 können daher weiterverwendet werden.

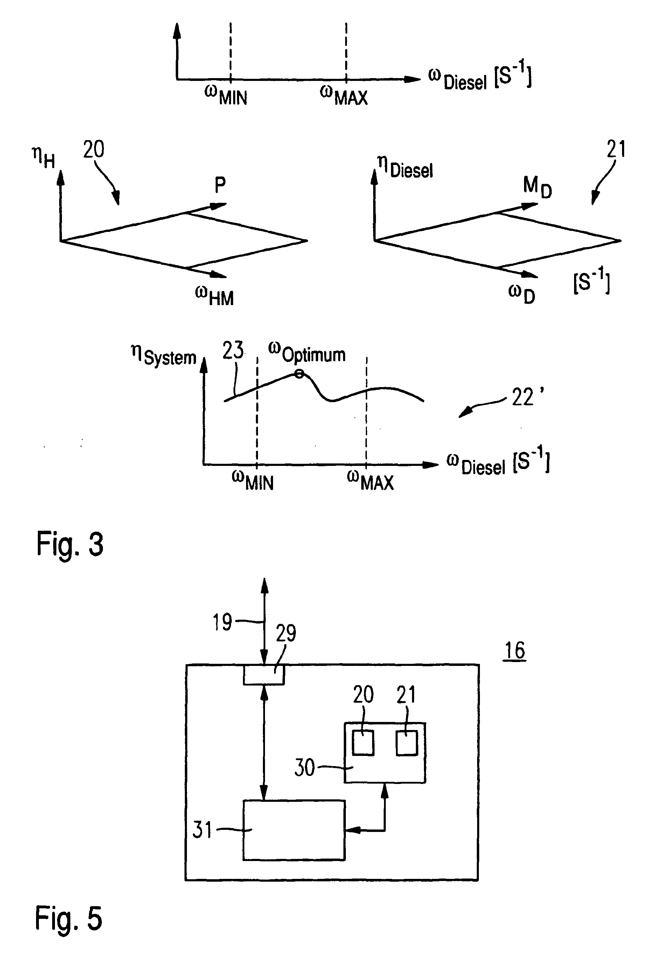

In Fig. 3 ist nochmals eine vereinfachte schematische Darstellung des Ablaufs des erfindungsgemäßen Verfahrens dargestellt. Zunächst wird das Drehzahlfenster für die Antriebsmaschine 2 ermittelt. Für das sich zwischen ω_{MIN} und ω_{MAX} ergebende Drehzahlintervall wird aus dem ersten Kennfeld 20 und dem zweiten Kennfeld 21 derjenige Bereich herausgegriffen, der mit dem ermittelten Drehzahlfenster übereinstimmt. Für dieses Drehzahlfenster wird das kombinierte Kennfeld ermittelt, wobei in Fig. 3 ein vereinfachtes kombiniertes Kennfeld 22' dargestellt ist, welches lediglich zweidimensional ist. Das vereinfachte kombinierte Kennfeld 22' enthält einen Gesamtwirkungsgradverlauf 23, der im dargestellten Beispiel ein eindeutig bestimmbares Wirkungsgradmaximum ω_{OPtimum} aufweist.

Sofern nicht bestimmte Randbedingungen dem Betreiben der Antriebsmaschine 2 oder der hydrostatischen Antriebseinheit 3 bei diesem Betriebspunkt ω_{Optimum} widersprechen, wird das Antriebssystem 1 auf den dem optimalen Wirkungsgrad ω_{Optimum} entsprechenden Betriebspunkt eingestellt. Zunächst wird die Drehzahl der Antriebsmaschine 2 auf die Solldrehzahl geregelt. Anschließend werden die Schrägscheiben bzw. Schrägachsen der hydrostatischen Kolbenmaschinen der hydrostatischen Antriebseinheit 3 auf die dem Betriebspunkt entsprechenden Werte geschwenkt, um ausgehend von der eingestellten Eingangsdrehzahl ω_{Optimum} ein passendes Übersetzungsverhältnis der hydrostatischen Antriebseinheit 3 zu wählen.

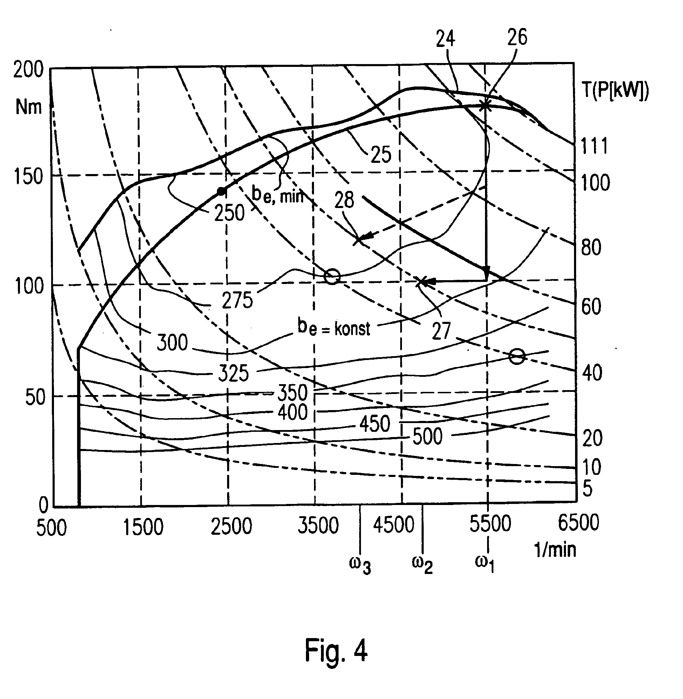

In Fig. 4 ist beispielhaft in einer zweidimensionalen Darstellung ein zweites Kennfeld einer Verbrennungskraftmaschine dargestellt. In Fig. 4 ist stark vereinfacht der Unterschied zwischen der bisherigen Regelstrategie und der erfindungsgemäßen Regelstrategie dargestellt. Ausgehend von einer eingestellten Drehzahl ω₁ in einem ersten Betriebspunkt 26, der beispielsweise der Nenn-Drehzahl der Antriebsmaschine 2 entspricht, wurde bei einer reduzierten Leistungsanforderung bislang an der Antriebsmaschine 2 eine fest vorgegebene Drehzahl ω₂ zu einem Betriebspunkt 27 der Antriebsmaschine 2 eingestellt. Dieser zweite Betriebspunkt 27 trug allein der unterschiedlichen Einstellung des Betriebszustands des mobilen Arbeitsgeräts Rechnung. So wurde beispielsweise nur berücksichtigt, dass anstelle der Arbeitshydraulik lediglich die Anforderung des hydrostatischen Fahrantriebs Leistung abnimmt. Die Drehzahl zum Einstellen des zweiten Betriebspunkts 27 war dabei unabhängig von der tatsächlich erforderlichen Abgabeleistung. Insbesondere wurde bei der Einstellung der Drehzahl nicht berücksichtigt, dass sich eine bestimmte abgegebene Leistung durch die hydrostatische Antriebseinheit 3 bei unterschiedlichen Einstellungen der hydrostatischen Antriebseinheit 3 realisieren lässt.

Erfindungsgemäß wird dagegen das erste Kennfeld der hydrostatischen Antriebseinheit 3 berücksichtigt. Damit kann die erforderliche Abgabeleistung entweder bei einer hohen Drehzahl und einem niedrigen Hubvolumen, beispielsweise einer Hydropumpe, oder aber bei einer niedrigen Drehzahl mit hohem Hubvolumen realisiert werden. Die entsprechenden Wirkungsgrade der hydrostatischen Antriebseinheit werden in der elektronischen Steuereinheit 16 der hydrostatischen Antriebseinheit 3 durch das erste Kennfeld 20 berücksichtigt und hieraus ein Betriebspunkt für das Antriebssystem 1 bzw. letztlich eine Solldrehzahl für die Antriebsmaschine 2 ermittelt.

Diese Solldrehzahl ω₃, die durch die elektronische Steuereinheit 16 vorgegeben und durch das Motorsteuergerät 13 umgesetzt wird, ist in Fig. 4 dem dritten Betriebspunkt 28 zugeordnet. Um den unmittelbaren Vergleich zu ermöglichen, ist es in Fig. 4 dargestellt, dass die eingestellten Leistungen des zweiten Betriebspunkts 27 und des dritten Betriebspunkts 28 auf einer Kurve identischer Leistung der Antriebsmaschine 2 liegen. Der dritte Betriebspunkt 28, der unter Berücksichtigung des ersten Kennfelds der hydrostatischen Antriebseinheit 3 ermittelt wurde, liegt jedoch in Bezug auf die Linien konstanten spezifischen Brennstoffbedarfs bₑ weiter in Richtung des minimalen Kraftstoffverbrauchs 25 verschoben. Die Linie des minimalen Kraftstoffverbrauchs 25 selbst wird dabei nicht erreicht, da in der Darstellung des minimalen Kraftstoffverbrauchs der Einfluss der hydrostatischen Antriebseinheit 3 auf den Gesamtwirkungsgrad fehlt. Würde man daher die Antriebsmaschine 2 allein auf die Linie des minimalen Kraftstoffverbrauchs regeln, so würde der sich damit verschlechternde Wirkungsgrad der hydrostatischen Antriebseinheit 3 zu einer Verschlechterung des Gesamtwirkungsgrads führen.

In Fig. 5 ist stark vereinfacht der Aufbau der elektronischen Steuereinheit 16 der hydrostatischen Antriebseinheit 3 dargestellt. Die elektronische Steuereinheit 16 umfasst eine Schnittstelle 29, mit der über die zweite Signalleitung 19 die elektronische Steuereinheit 16 mit einem CAN-Bus 17 eines Fahrzeugs kommuniziert. Zum Speichern des ersten Kennfelds 20 und des zweiten Kennfelds 21 ist ein Speicher 30 vorgesehen, welche mit einer zentralen Recheneinheit 31 verbunden ist. Die zentrale Recheneinheit 31 ermittelt aus den aus dem Speicher 30 ausgelesenen ersten Kennfeld 20 und dem zweiten Kennfeld 21 ein kombiniertes Kennfeld und ermittelt in diesem errechneten kombinierten Kennfeld einen optimierten Betriebspunkt. Die diesem Betriebspunkt zugeordnete Solldrehzahl der Antriebsmaschine 2 wird über die Schnittstelle 29 und die Signalleitung 19 zum CAN-Bus 17 und weiter zu dem Motorsteuergerät 13 übertragen. In dem Speicher 30 kann auch ein kombiniertes Kennfeld abgespeichert sein, in dem unmittelbar der Betriebspunkt ermittelt wird.

Die elektronische Steuereinheit 16 ist vorzugsweise so eingerichtet, dass über die Schnittstelle 29 in dem Speicher 30 verschiedene Kennfelder 20, 21 abgespeichert werden können, so dass ein individualisierter Einsatz der elektronischen Steuereinheit 16 in Bezug auf unterschiedliche Kombinationen von Antriebsmaschinen 2 und hydrostatischen Antriebseinheiten 3 möglich ist.

Die Erfindung ist nicht auf die dargestellten Ausführungsbeispiele beschränkt. Vielmehr sind Kombinationen einzelner in den Figuren dargestellter und beschriebener Merkmale in beliebigen Kombinationen möglich.

## Patentansprüche

1. Verfahren zum Regeln eines Antriebssystems (1) mit einer Antriebsmaschine (2) und zumindest einer damit verbundenen hydrostatischen Antriebseinheit (3) mit folgenden Verfahrensschritten:
- Ermitteln einer Abgabeleistung der hydrostatischen Antriebseinheit (3),
- Ermitteln eines Betriebspunkts (28) für das Antriebssystem (1) unter Berücksichtigung eines ersten Kennfelds (20) der hydrostatischen Antriebseinheit (3) und der Abgabeleistung,
wobei die hydrostatische Antriebseinheit (3) zwei jeweils separat verstellbare Kolbenmaschinen (5,6) aufweist und ein Sollwert für deren Schluck- und/oder Fördervolumen unter Berücksichtigung eines zweiten Kennfelds (20) der Antriebsmaschine (2) ermittelt wird,
**dadurch gekennzeichnet,**
**dass** das erste und das zweite Kennfeld (20, 21) jeweils Wirkungsgrad-Kennfelder sind und zur Ermittlung eines kombinierten Wirkungsgrad-Kennfelds (22) kombiniert werden, welches einen Gesamtwirkungsgrad des Antriebsystems (1) angibt.

2. Verfahren nach Anspruch 1,
**dadurch gekennzeichnet,**
**dass** das kombinierte Kennfeld (22, 22') für einen aus der Abgabeleistung ermittelten Antriebsdrehzahlbereich (ω_{Min} - ω_{Max}) ermittelt wird.

3. Verfahren nach Anspruch 2,
**dadurch gekennzeichnet,**
**dass** in dem kombinierten Kennfeld (22, 22') ein Betriebspunkt (28) mit einem optimierten Wirkungsgrad (ωₒₚₜᵢₘᵤₘ) des Antriebssystems (1) ermittelt wird.

4. Verfahren nach einem der Ansprüche 1 bis 3,
**dadurch gekennzeichnet,**
**dass** die Abgabeleistung aus gemessenen Betriebsparametern der hydrostatischen Antriebseinheit (3) ermittelt wird.

5. Verfahren nach einem der Ansprüche 1 bis 4,
**dadurch gekennzeichnet,**
**dass** die Abgabeleistung in Abhängigkeit von einem Steuersignal eines Fahrhebels (11) ermittelt wird

6. Verfahren nach einem der Ansprüche 1 bis 5,
**dadurch gekennzeichnet,**
**dass** der Betriebspunkt (28) der Antriebsmaschine (2) durch eine elektronische Steuereinheit (16) der hydrostatischen Antriebseinheit (3) berechnet wird.

7. Verfahren nach einem der Ansprüche 1 bis 6,
**dadurch gekennzeichnet,**
**dass** zum Einstellen des Betriebspunkts (28) einem Motorsteuergerät (13) der Antriebsmaschine (2) durch die elektronische Steuereinheit (16) der hydrostatischen Antriebseinheit (3) eine Solldrehzahl vorgegeben wird.

8. Verfahren nach Anspruch 7,
**dadurch gekennzeichnet,**
**dass** die Übermittlung der Solldrehzahl von der elektronischen Steuereinheit (16) zu dem Motorsteuergerät (13) über einen CAN-Bus (17) erfolgt.

9. Verfahren nach Anspruch 7 oder 8,
**dadurch gekennzeichnet,**
**dass** die Antriebsmaschine (2) durch das Motorsteuergerät (13) auf die Solldrehzahl verstellt wird.

10. Verfahren nach Anspruch 9,
**dadurch gekennzeichnet,**
**dass** die Verstellung der Antriebsmaschine (2) auf die Solldrehzahl vor einer Verstellung des Schluck- und/oder Fördervolumens der zumindest einen hydrostatischen Kolbenmaschine (5, 6) der hydrostatischen Antriebseinheit (3) erfolgt.

11. Elektronische Steuereinheit für ein Antriebssystem (1) mit einer Antriebsmaschine (2) und zumindest einer damit verbundenen hydrostatischen Antriebseinheit (3), wobei die elektronische Steuereinheit (16) einen Speicher (30) und eine zentrale Recheneinheit (31) umfasst und in dem Speicher (30) ein erstes Kennfeld (20) der hydrostatischen Antriebseinheit (3) und ein zweites Kennfeld (21) der Antriebsmaschine (2) gespeichert sind und wobei durch die zentrale Recheneinheit (31) auf Basis der Kennfelder (20, 21) der hydrostatischen Antriebseinheit (3) und der Antriebsmaschine (2) und einer Abgabeleistung der hydrostatischen Antriebseinheit (3) ein Betriebspunkt des Antriebssystems (1) ermittelbar ist,
wobei durch die elektronische Steuereinheit (16) zwei jeweils separat verstellbare Kolbenmaschinen (5,6) der hydrostatischen Antriebseinheit (3) in ihrem Schluck- und Fördervolumen einstellbar sind,
**dadurch gekennzeichnet,**
**dass** das erste und das zweite Kennfeld (20, 21) jeweils Wirkungsgrad-Kennfelder sind und zur Ermittlung eines kombinierten Wirkungsgrad-Kennfelds (22), welches einen Gesamtwirkungsgrad des Antriebsystems (1) angibt, in der Steuereinheit (16) kombinierbar sind.

12. Elektronische Steuereinheit nach Anspruch 11,
**dadurch gekennzeichnet,**
**dass** durch die zentrale Recheneinheit (31) in dem kombinierten Kennfeld (22, 22') ein Betriebspunkt (28) mit einem optimierten Wirkungsgrad des Antriebssystems (1) ermittelbar ist

13. Elektronische Steuereinheit nach Anspruch 11 oder 12,
**dadurch gekennzeichnet,**
**dass** durch die zentrale Recheneinheit (1) aus gemessenen Betriebsparametern der hydrostatischen Antriebseinheit (3) eine Abgabeleistung ermittelbar ist.

14. Elektronische Steuereinheit nach einem der Ansprüche 11 bis 13,
**dadurch gekennzeichnet,**
**dass** durch die elektronische Steuereinheit eine Solldrehzahl der Antriebsmaschine ausgebbar ist.

15. Elektronische Steuereinheit nach einem der Ansprüche 11 bis 14,
**dadurch gekennzeichnet,**
**dass** die elektronische Steuereinheit (16) zur Übermittlung der Solldrehzahl mit einem CAN-Bus (17) verbunden ist.

## Claims

1. Method for regulating a drive system (1) with a driving engine (2) and at least one hydrostatic drive unit (3) which is connected to the latter, comprising the following method steps:
- establishing an output power of the hydrostatic drive unit (3),
- establishing an operating point (28) for the drive system (1) while taking a first characteristics map (20) of the hydrostatic drive unit (3) and the output power into account,
wherein the hydrostatic drive unit (3) has two piston engines (5, 6), each separately adjustable, and a desired value for the absorption and/or delivery volume thereof is established while taking a second characteristics map (20) of the driving engine (2) into account,
**characterised in**
**that** the first and the second characteristics map (20, 21) are in each case efficiency characteristics maps and are combined in order to establish a combined efficiency characteristics map (22) which indicates an overall efficiency of the drive system (1).

2. Method according to Claim 1,
**characterised in**
**that** the combined characteristics map (22, 22') is established for a driving sped range (ω_{MIN} - ω_{MAX} which is established from the output power.

3. Method according to Claim 2,
**characterised in**
**that** an operating point (28) with optimised efficiency (ωₒₚₜᵢₘᵤₘ) of the drive system (1) is established in the combined characteristics map (22, 22').

4. Method according to any one of Claims 1 to 3,
**characterised in**
**that** the output power is established from measured operating parameters of the hydrostatic drive unit (3).

5. Method according to any one of Claims 1 to 4,
**characterised in**
**that** the output power is established in accordance with a control signal of a joystick (11).

6. Method according to any one of Claims 1 to 5,
**characterised in**
**that** the operating point (28) of the driving engine (2) is calculated by an electronic control unit (16) of the hydrostatic drive unit (3).

7. Method according to any one of Claims 1 to 6,
**characterised in**
**that** a desired speed is predetermined for an engine control instrument (13) of the driving engine (2) by the electronic control unit (16) of the hydrostatic drive unit (3) in order to set the operating point (28).

8. Method according to Claim 7,
**characterised in**
**that** the transmission of the desired speed from the electronic control unit (16) to the engine control instrument (13) takes place via a CAN bus (17).

9. Method according to Claim 7 or 8,
**characterised in**
**that** the driving engine (2) is adjusted to the desired speed by the engine control instrument (13).

10. Method according to Claim 9,
**characterised in**
**that** the adjustment of the driving engine (2) to the desired speed takes place prior to an adjustment of the absorption and/or delivery volume of the at least one hydrostatic piston engine (5, 6) of the hydrostatic drive unit (3).

11. Electronic control unit for a drive system (1) with a driving engine (2) and at least one hydrostatic drive unit (3) which is connected to the latter, wherein the electronic control unit (16) comprises a memory (30) and a central processing unit (31), and a first characteristics map (20) of the hydrostatic drive unit (3) and a second characteristics map (21) of the driving engine (2) are stored in the memory (30), and wherein an operating point of the drive system (1) can be established by the central processing unit (31) on the basis of the characteristics maps (20, 21) of the hydrostatic drive unit (3) and the driving engine (2) and an output power of the hydrostatic drive unit (3),
wherein two piston engines (5, 6), each separately adjustable, of the hydrostatic drive unit (3) can be set in their absorption and delivery volume by the electronic control unit (16),
**characterised in**
**that** the first and the second characteristics map (20, 21) are in each case efficiency characteristics maps and can be combined in the control unit (16) in order to establish a combined efficiency characteristics map (22) which indicates an overall efficiency of the drive system (1).

12. Electronic control unit according to Claim 11,
**characterised in**
**that** an operating point (28) with optimised efficiency of the drive system (1) can be established by the central processing unit (31) in the combined characteristics map (22, 22').

13. Electronic control unit according to Claim 11 or 12,
**characterised in**
**that** an output power can be established by the central processing unit (1) from measured operating parameters of the hydrostatic drive unit (3).

14. Electronic control unit according to any one of Claims 11 to 13,
**characterised in**
**that** a desired speed of the driving engine can be output by the electronic control unit.

15. Electronic control unit according to any one of Claims 11 to 14,
**characterised in**
**that** the electronic control unit (16) is connected to a CAN bus (17) in order to transmit the desired speed.

## Revendications

1. Procédé de réglage d'un système de transmission (1) avec un moteur d'entraînement (2) et au moins une unité d'entraînement (3) hydrostatique, reliée à ce dernier, comportant les étapes suivantes:
- calcul d'une puissance utile de l'unité d'entraînement (3) hydrostatique,
- calcul d'un point de fonctionnement dynamique (28) pour le système de transmission (1) en tenant compte d'un premier champ caractéristique (20) de l'unité d'entraînement (3) hydrostatique et de la puissance utile,
ladite unité d'entraînement (3) hydrostatique comportant deux moteurs à piston (5, 6) réglables chacun séparément, et une valeur de consigne étant déterminée pour le volume d'absorption et/ou de transport de ceux-ci en tenant compte d'un deuxième champ caractéristique (20) du moteur d'entraînement (2),
**caractérisé en ce que** le premier et le deuxième champ caractéristique (20, 21) sont respectivement des champs caractéristiques de rendement et sont combinés l'un à l'autre pour déterminer un champ caractéristique de rendement (22) combiné, qui indique un rendement total du système de transmission (1).

2. Procédé selon la revendication 1, **caractérisé en ce que** le champ caractéristique combiné (22, 22') est déterminé pour une plage de vitesses de rotation d'entraînement (ωₘᵢₙ - ωₘₐₓ), calculée à partir de la puissance utile.

3. Procédé selon la revendication 2, **caractérisé en ce que** dans le champ caractéristique combiné (22, 22') est déterminé un point de fonctionnement dynamique (28) avec un rendement optimisé (ωₒₚₜᵢₘᵤₘ) du système de transmission (1).

4. Procédé selon l'une quelconque des revendications 1 à 3, **caractérisé en ce que** la puissance utile est calculée à partir des paramètres de service mesurés de l'unité d'entraînement (3) hydrostatique.

5. Procédé selon l'une quelconque des revendications 1 à 4, **caractérisé en ce que** la puissance utile est calculée en fonction d'un signal de commande d'un levier de vitesse (11).

6. Procédé selon l'une quelconque des revendications 1 à 5, **caractérisé en ce que** le point de fonctionnement dynamique (28) du moteur d'entraînement (2) est calculé par une unité de commande (16) électronique de l'unité d'entraînement (3) hydrostatique.

7. Procédé selon l'une quelconque des revendications 1 à 6, **caractérisé en ce que**, pour le réglage du point de fonctionnement dynamique (28), une vitesse de rotation de consigne est prédéfinie à un dispositif de commande (13) du moteur d'entraînement (2) par l'unité de commande (16) électronique de l'unité d'entraînement (3) hydrostatique.

8. Procédé selon la revendication 7, **caractérisé en ce que** la vitesse de rotation de consigne est transmise depuis l'unité de commande (16) électronique vers le dispositif de commande (13) du moteur via un bus CAN (17).

9. Procédé selon la revendication 7 ou 8, **caractérisé en ce que** le moteur d'entraînement (2) est réglé à la vitesse de rotation de consigne par le dispositif de commande (13) du moteur.

10. Procédé selon la revendication 9, **caractérisé en ce que** le réglage du moteur d'entraînement (2) à la vitesse de rotation de consigne est effectué avant un réglage du volume d'absorption et/ou de transport dudit au moins un moteur à piston (5, 6) hydrostatique de l'unité d'entraînement (3) hydrostatique.

11. Unité de commande électronique pour un système de transmission (1) avec un moteur d'entraînement (2) et au moins une unité d'entraînement (3) hydrostatique reliée à ce dernier, ladite unité de commande (16) électronique comportant une mémoire (30) et une unité de calcul (31) centrale, et un premier champ caractéristique (20) de l'unité d'entraînement (3) hydrostatique et un deuxième champ caractéristique (21) du moteur d'entraînement (2) étant stockés dans la mémoire (30), et un point de fonctionnement dynamique du système de transmission (1) étant déterminé par l'unité de calcul (31) centrale sur la base des champs caractéristiques (20, 21) de l'unité d'entraînement (3) hydrostatique et du moteur d'entraînement (2) et d'une puissance utile de l'unité d'entraînement (3) hydrostatique, sachant que le volume d'absorption et de transport de deux moteurs à piston (5, 6), réglables chacun séparément, de l'unité d'entraînement (3) hydrostatique peut être réglé par l'unité de commande (16) électronique,
**caractérisée en ce que** le premier et le deuxième champ caractéristique (20, 21) sont respectivement des champs caractéristiques de rendement et peuvent être combinés l'un à l'autre dans l'unité de commande (16) en vue de déterminer un champ caractéristique combiné (22) qui indique un rendement total du système de transmission (1).

12. Unité de commande électronique selon la revendication 11, **caractérisée en ce qu'**un point de fonctionnement dynamique (28) avec un rendement optimisé du système de transmission (1) peut être déterminé par l'unité de calcul (31) centrale dans le champ caractéristique combiné (22, 22')/

13. Unité de commande électronique selon la revendication 11 ou 12, **caractérisée en ce qu'**une puissance utile peut être déterminée par l'unité de calcul (31) centrale à partir des paramètres de service mesurés de l'unité d'entraînement (3) hydrostatique.

14. Unité de commande électronique selon l'une quelconque des revendications 11 à 13, **caractérisée en ce qu'**une vitesse de rotation de consigne du moteur d'entraînement peut être éditée par l'unité de commande électronique.

15. Unité de commande électronique selon l'une quelconque des revendications 11 à 14, **caractérisée en ce que** l'unité de commande (16) électronique est reliée à un bus CAN (17) pour la transmission de la vitesse de rotation de consigne.
